# EUROPEAN PATENT SPECIFICATION

(11) **EP 1 498 709 B1**
(45) Date of publication and mention of the grant of the patent: **18.01.2012**
(21) Application number: 04076842.6
(22) Date of filing: 24.06.2004
(51) Int. Cl.: G01J 5/08

(54) **Laser system**
Lasersystem
Système laser

(30) Priority: 14.07.2003 US 486951 P
(43) Date of publication of application: 19.01.2005
(73) Proprietor: White Box Inc., Stamford, Connecticut 06907 (US)
(72) Inventor: Baghai, Shahin, Trumbull, Connecticut 06611 (US)
(74) Representative: Steil, Christian

(56) References cited:
- EP-A- 1 085 307
- US-A- 4 494 881
- US-A- 5 368 392
- US-B1- 6 280 082

## Description

This invention relates to the use of laser beams to identify the location and size of a target surface area for measurement or treatment and in particular relates to controlling the brightness of such laser beams.

It is known in the art of non-contact temperature measurement to direct an infrared radiometer, having a field of view, at a target surface to measure invisible heat radiation emanating therefrom and to identify the target location and size by projection of one or more visible laser beams onto the target, so that the radiometer user can visualise and identify the target area detected by the radiometer.

It is known to use either moving or stationary laser beams for targetting and to project one or more beams to identify the extent and location of the target area. Our copending European application number (based on US 60/478,935) describes a device having at least two laser emitters defining the sighting area. The laser sighting device can be mounted on a hand-held instrument, including an infra-red detector or radiometer.

When laser sighting is used with a measurement device, there are limiting operational features. The laser light must be bright enough to be seen on the target, even at substantial distance from the instrument, but the laser light must not be so bright as to risk damage to the eye. Sometimes the laser sighting light must penetrate vapours or smoke or fumes to reach the target and then to be seen.

Current instruments employing lasers tend to use the lowest workable brightness, which is cheaper and safer since brighter lasers require greater safety regulation and control.

The present invention seeks to provide an instrument wherein the laser brightness, within safety limits, is controllable by the operator.

An infrared measurement radiometer according to the preamble of claim 1 is known from EP 1 085 307 A1. Further prior art radiometers are disclosed in documents US-A-5,368,392 and US 6,280,082 B1.

It is an object of the invention to provide an improved infrared measurement radiometer and a corresponding method.

This object is achieved by the infrared measurement radiometer of claim 1 and by the method of controlling the brightness of a plurality of laser beams of claim 6.

In accordance with the invention, the operator of an instrument is able to adjust the laser brightness, within safety limits, which allow enough brightness to be both safe and useful. When the target measurement or treatment area is located at a relatively long distance away from the instrument, or in obscure illumination conditions, greater laser brightness becomes valuable.

For commercial and safety reasons, laser devices are commonly classified in brightness as Class 2 (less than 1 milliwatt), or Class 3A (less than 5 milliwatt), or Class 3B (more than 5 milliwatt), as measured under standardised conditions. Brighter lasers require greater safety regulation and control. Use of the lowest workable brightness is cheaper and safer. According to the invention, means are employed to obtain optimal safe laser illumination of a target measurement or treatment area.

The following table shows a relationship between laser voltage supply, brightness and classification.

| **Supply Voltage** | **Laser Brightness/Power Output** | | **Classification** |
|---|---|---|---|
| | **#1** | **#2** | |
| 2.20 VDC | 0.225mw | 0.370W | Class 2 |
| 2.24 VDC | 0.874mW | 0.986mW | Class 2 |
| 2.30 VDC | 1.355mW | 1.435mW | Class 3A |
| 2.50 VDC | 1.822mW | 1.871mW | Class 3A |
| 2.75 VDC | 2.25mW | 2.231mW | Class 3A |
| 3.20 VDC | 2.93mW | 2.963W | Class 3A |
| 3.60 VDC | 3.630mW | 3.685mW | Class 3A |
| 4.00 VDC | 4.42mW | 4.57mW | Class 3A |
| 4.50 VDC | 5.57mW | 5.62mW | Class 3B |

Thus, brightness is controlled from about 0.3mW to about 5.6mW by a change in supply voltage.

The brightness of one or more lasers mounted on a hand held measurement instrument with integral power supply may be controlled by power switching control as managed by the operator. This can be used together with optical attenuation and selection of the number of active lasers.

Any or all of the lasers in the device of the invention may be mounted so as to be able to tilt or swivel together or independently
so that the operator can direct their beams as desired.

The invention will now be described, by way of example, with reference to the accompanying drawings, in which:
Figure 1 (a) is a circuit diagram of an electrical method of laser brightness control, and Figure 1(b) is a detail of the potentiometer used;
Figure 2 is a circuit diagram of a laser brightness control system employing a micro-processor; and
Figures 3(a) and (b) are two circuit diagrams of laser control devices employing laser modulation.

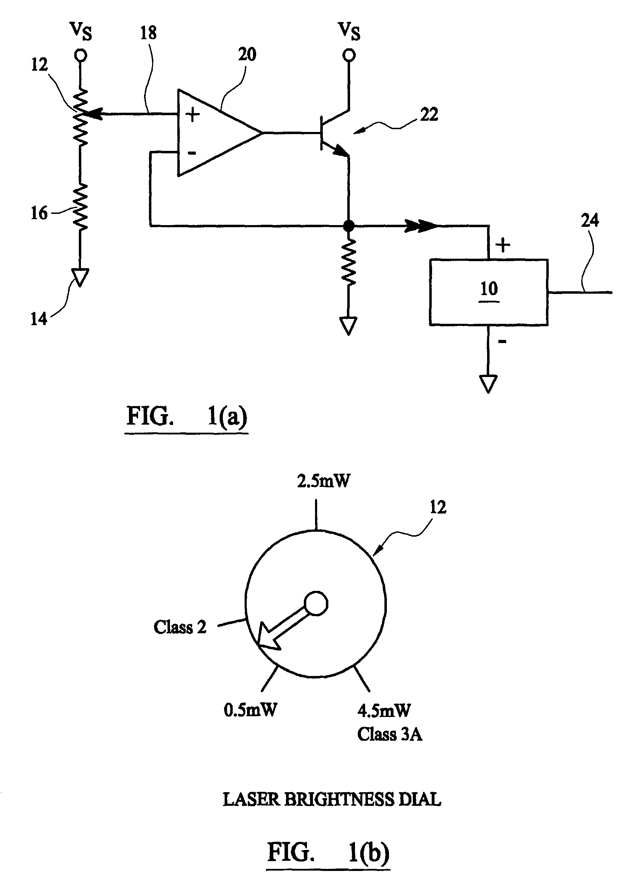

Referring to the drawings, and in particular Figure 1, which illustrates a power, and hence brightness, control circuit for a laser emitter device or module (10) which comprises a potentiometer (12) connected between a voltage supply Vₛ and ground (14) through a resistor (16). The output (18) from the potentiometer (12) goes through an amplifier (20) to a transistor (22), in turn connected to the laser device. Variation of the potentiometer (12) causes the power fed to the laser device (10) to be varied accordingly. The device (10) emits a laser beam (24), the brightness of which varies in step with the power. The potentiometer (12) is illustrated in detail in Figure 1(b), where it can be seen that its dial is labelled to indicate the level of brightness or optical power output. For example, the dial may indicate from 0.5 to 4.5 milliwatts with indicating marks for Class 2 and Class 3A limits. The potentiometer (12) is a single turn potentiometer, but other devices to adjust the laser brightness may be employed, such as a slide switch or a twistable knob projection control.

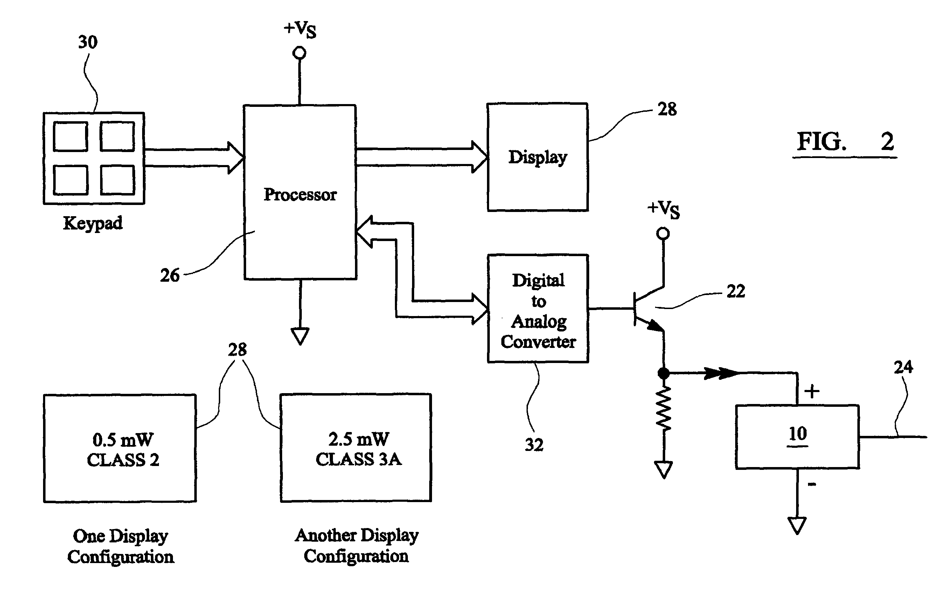

Turning now to Figure 2, the laser brightness control system illustrated here includes a micro-processor (26) connected to a display (28) and having a keypad (30) input. Output from the processor (26) is connected, via a digital-to-analogue convertor (32) and a transistor (34), to a voltage supply Vₛ to a laser device (10) as before. The keypad (30) is used to adjust the power output and, as the keypad adjusts the output, the display (28) indicates the brightness and classification limit, e.g. as shown inset in Figure 2.

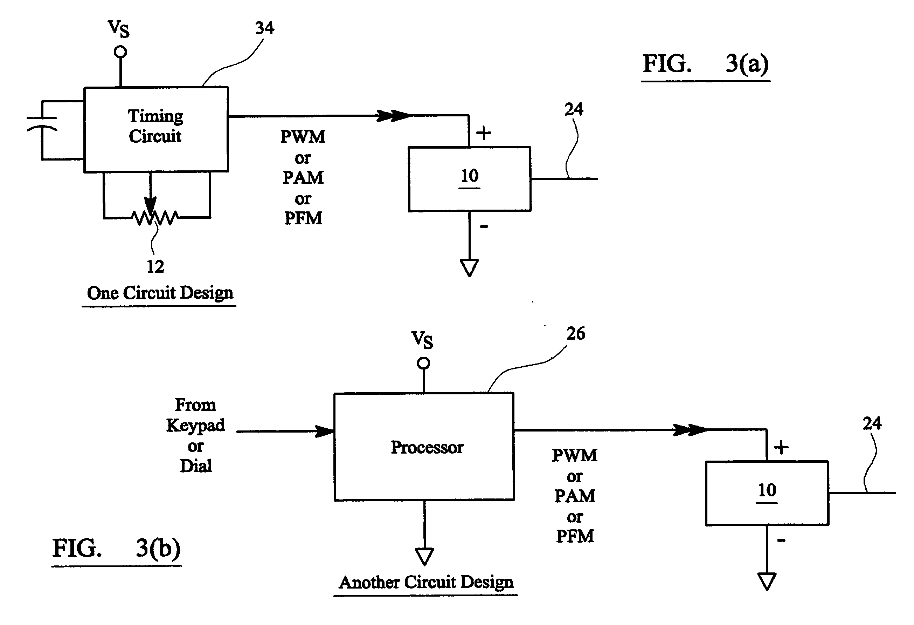

Further laser control methods involve pulsing, such as pulse width modulation (PWS), pulse amplitude modulation (PAM), or pulse frequency modulation (PFM), as shown in Figure 3. In Figure 3(a) the width of pulse is varied in proportion to laser brightness by means of a timing circuit (34). In Figure 3(b), a processor (26) is employed to vary the width, amplitude or frequency of the power pulse in proportion to the laser brightness.

The various pulse modulation modes can be used individually or together sequentially in the same device or simultaneously.

The device of the present invention enables the operator in a simple and inexpensive manner to control the brightness of laser beams with an infra-red detection device to produce optimum brightness while remaining within margins of safety.

## Claims

1. An infrared measurement radiometer having a plurality of laser emitters (10) to define a visible sighting area by laser beams (24), **characterized in that** the brightness of one or more of the laser beams (24) emitted and projected onto a target is changed by an operator by variation of the electrical power supply (Vₛ) to one or more of the laser emitters (10), and **in that** the radiometer is adapted to set the brightness of one or more of the laser emitters (10) at different levels by variation of the electrical power supply (Vₛ).

2. The radiometer as claimed in claim 1, **characterized in that** the variation in electrical power is achieved with a variable resistor circuit (12) located electrically between the laser emitter (10) and a power source.

3. The radiometer as claimed in claim 1, **characterized in that** the variation in electrical power is achieved by a digital-to-analogue converter (32) connected to a micro-processor (26) having a keypad (30) input to control a power source connected to the laser emitter (10).

4. The radiometer as claimed in claim 1, **characterized in that** the variation in electrical power is achieved by power pulsing, wherein the width, the amplitude or the frequency of the power pulse is varied by a timing circuit (34) or a processor (26) located electrically between the laser emitter (10) and a power source.

5. The radiometer as claimed in claim 1, **characterized in that** one or more of the laser emitters (10) are mounted so as to be tilted or swiveled independently to direct the respective beams in different directions.

6. A method of controlling the brightness of a plurality of laser beams (24) identifying the location and size of a target area to be measured by an infra-red measurement radiometer which comprises a plurality of laser emitters (10), wherein the brightness of one or more laser beams emitted and projected onto the target is changed by variation of the electrical power supply to one or more of the laser emitters (10) generating the one or more laser beams (24), wherein the brightness of the one or more of the laser beams (24) emitted and projected onto the target is set to different levels by variation of the electrical power supply (Vₛ).

7. A method as claimed in claim 6, wherein the variation in electrical power is achieved with a variable resistor circuit (12) located electrically between the laser emitter (10) and a power source.

8. A method as claimed in claim 6, wherein the variation in electrical power is achieved by a digital-to-analogue converter (32) connected to a micro-processor (26) having a keypad (30) input to control a power source connected to the laser emitter (10).

9. A method as claimed in claim 6, wherein the variation in electrical power is achieved by power pulsing, wherein the width, the amplitude or the frequency of the power pulse is varied by a timing circuit (34) or by a processor (26) located electrically between the laser emitter (10) and a power source.

## Patentansprüche

1. Infrarotradiometer mit einer Mehrzahl von Laseremittern (10), um einen sichtbaren Visierbereich durch Laserstrahlen (24) zu definieren, **dadurch gekennzeichnet, dass** die Helligkeit eines oder mehrerer der Laserstrahlen (24), die emittiert und auf ein Ziel projiziert werden, durch eine Bedienungsperson durch Verändern der elektrischen Leistungsversorgung (Vₛ) für einen oder mehrere der Laseremitter (10) geändert wird und dass das Radiometer dazu ausgebildet ist, die Helligkeit eines oder mehrerer der Laseremitter (10) durch Verändern der elektrischen Leistungsversorgung (Vₛ) auf verschiedene Pegel einzustellen.

2. Radiometer nach Anspruch 1, **dadurch gekennzeichnet, dass** das Verändern der elektrischen Leistung durch eine Schaltung (12) mit veränderbarem Widerstand erreicht wird, die elektrisch zwischen dem Laseremitter (10) und der Leistungsquelle angeordnet ist.

3. Radiometer nach Anspruch 1, **dadurch gekennzeichnet, dass** das Verändern der elektrischen Leistung durch einen Digital/Analog-Wandler (32) erreicht wird, der mit einem Mikroprozessor (26) verbunden ist, der einen Tastatureingang (30) aufweist, um eine Leistungsquelle zu steuern, die mit dem Laseremitter (10) verbunden ist.

4. Radiometer nach Anspruch 1, **dadurch gekennzeichnet, dass** das Verändern der elektrischen Leistung durch Leistungspulsen erreicht wird, wobei die Breite, die Amplitude oder die Frequenz des Leistungspulses durch eine Zeitgeberschaltung (34) oder einen Prozessor (26) verändert wird, die bzw. der elektrisch zwischen dem Laserstrahler (10) und einer Leistungsquelle angeordnet ist.

5. Radiometer nach Anspruch 1, **dadurch gekennzeichnet, dass** ein oder mehrere der Laseremitter (10) so angebracht sind, dass sie unabhängig geneigt oder geschwenkt werden können, um die entsprechenden Strahlen in verschiedene Richtungen zu lenken.

6. Verfahren zum Steuern der Helligkeit von einer Mehrzahl von Laserstrahlen (24), die die Position und die Größe eines Zielbereichs identifizieren, der durch ein Infrarotradiometer, das eine Mehrzahl von Laseremittern (10) umfasst, gemessen werden soll, wobei die Helligkeit eines oder mehrerer Laserstrahlen, die emittiert und auf das Ziel projiziert werden, durch Verändern der elektrischen Leistungsversorgung an einen oder mehrere der Laseremitter (10), die den einen oder die mehreren Laserstrahlen (24) erzeugen, geändert wird, wobei die Helligkeit des einen oder der mehreren der emittierten und auf das Ziel projizierten Laserstrahlen (24) durch Verändern der elektrischen Leistungsversorgung (Vₛ) auf verschiedene Pegel eingestellt wird.

7. Verfahren nach Anspruch 6, wobei das Verändern der elektrischen Leistung durch eine Schaltung (12) mit veränderbarem Widerstand erreicht wird, die elektrisch zwischen dem Laseremitter (10) und einer Leistungsquelle angeordnet ist.

8. Verfahren nach Anspruch 6, wobei das Verändern der elektrischen Leistung durch einen Digital/Analog-Wandler (32) erreicht wird, der mit einem Mikroprozessor (26) verbunden ist, der einen Tastatureingang (30) aufweist, um eine Leistungsquelle zu steuern, die mit dem Laseremitter (10) verbunden ist.

9. Verfahren nach Anspruch 6, wobei das Verändern der elektrischen Leistung durch Leistungspulsen erreicht wird, wobei die Breite, die Amplitude oder die Frequenz des Leistungspulses durch eine Zeitgeberschaltung (34) oder durch einen Prozessor (26) verändert wird, die bzw. der elektrisch zwischen dem Laseremitter (10) und einer Leistungsquelle angeordnet ist.

## Revendications

1. Radiomètre de mesure à infrarouge comportant une pluralité d'émetteurs laser (10) pour définir une zone de visée visible à l'aide de faisceaux laser (24), **caractérisé en ce que** la luminosité d'un ou plusieurs des faisceaux laser (24) émis et projetés sur une cible est amenée à varier par un opérateur qui fait varier l'alimentation en courant électrique (Vₛ) d'un ou plusieurs des émetteurs laser (10), et **en ce que** le radiomètre est apte à régler la luminosité d'un ou plusieurs des émetteurs laser (10) à différents niveaux par variation de l'alimentation en courant électrique (Vₛ).

2. Radiomètre selon la revendication 1, **caractérisé en ce que** la variation du courant électrique est obtenue au moyen d'un circuit à résistance variable (12) situé électriquement entre l'émetteur laser (10) et une source de courant.

3. Radiomètre selon la revendication 1, **caractérisé en ce que** la variation du courant électrique est obtenue à l'aide d'un convertisseur numérique-analogique (32) connecté à un microprocesseur (26) comportant un clavier (30) d'entrée permettant de commander une source de courant connectée à l'émetteur laser (10).

4. Radiomètre selon la revendication 1, **caractérisé en ce que** la variation du courant électrique est obtenue par des impulsions de courant, dans lequel la largeur, l'amplitude ou la fréquence de l'impulsion de courant est amenée à varier par un circuit de temporisation (34) ou un processeur (26) situé électriquement entre l'émetteur laser (10) et une source de courant.

5. Radiomètre selon la revendication 1, **caractérisé en ce qu'**un ou plusieurs des émetteurs laser (10) est/sont monté(s) de manière inclinée ou pivotante indépendamment les uns des autres afin de diriger les faisceaux respectifs dans des directions différentes.

6. Procédé de commande de la luminosité d'une pluralité d'émetteurs laser (24) identifiant la position et la taille d'une zone cible devant être mesurée au moyen d'un radiomètre de mesure à infrarouge qui comprend une pluralité d'émetteurs laser (10), dans lequel la luminosité d'un ou plusieurs faisceaux laser émis et projetés sur une cible est amenée à varier par l'alimentation en courant électrique d'un ou plusieurs des émetteurs laser (10) générant les un ou plusieurs faisceaux laser (24), dans lequel la luminosité des un ou plusieurs faisceaux laser (24) émis et projeté(s) sur la cible est réglée à différents niveaux par variation de l'alimentation en courant électrique (Vₛ).

7. Procédé selon la revendication 6, dans lequel la variation du courant électrique est obtenue au moyen d'un circuit à résistance variable (12) situé électriquement entre l'émetteur laser (10) et une source de courant.

8. Procédé selon la revendication 6, dans lequel la variation du courant électrique est obtenue à l'aide d'un convertisseur numérique-analogique (32) connecté à un microprocesseur (26) comportant un pavé numérique (30) d'entrée permettant de commander une source de courant connectée à l'émetteur laser (10).

9. Procédé selon la revendication 6, dans lequel la variation du courant électrique est obtenue par production d'impulsions de courant, dans lequel la largeur, l'amplitude ou la fréquence de l'impulsion de courant est amenée à varier par un circuit de temporisation (34) ou par un processeur (26) situé électriquement entre l'émetteur laser (10) et une source de courant.
